# EUROPEAN PATENT APPLICATION

(11) **EP 3 517 261 A1**
(43) Date of publication of application: **31.07.2019**
(21) Application number: 18460005.4
(22) Date of filing: 30.01.2018
(51) Int. Cl.: B27C 1/00, B27D 5/00, B27G 13/08, B23C 3/00, B23C 5/06

(54) **A METHOD OF MILLING IN THE MACHINED WORKPIECE SYSTEM USING THE FACE OF AN ANGLE MILLING CUTTER WITH A DEFINITE CUTTING EDGE GEOMETRY**

(71) Applicant: P.P.U.H. "BRYK" Witold Bryk, 37-124 Kraczkowa (PL)
(72) Inventor: Bryk, Witold, 35-314 Rzeszów (PL)
(74) Representative: Warzybok, Tadeusz

(57) **Abstract**

The subject matter of the invention is a method of milling surfaces of flat and profiled surfaces of board-shaped workpieces in the system referenced to said workpieces with the use of cutting tools such as shank cutters and angle milling cutters with definite cutting edge geometries, characterized in that in the course of milling the workpiece (1), the spindle (2) of the milling machine together with the angle milling cutter (3) mounted in said spindle is tilted so that between the machined workpiece (1) situated in the plane (X, Y, Z) and the angle milling cutter (3) situated in the system of mutually orthogonal planes (Pp, Pf, Pr), the following angles are formed:
- the tilt angle (ω) included between the face plane (Pf) of the angle milling cutter (3) and the side plane (X, Y) of the machined workpiece (1);
- the axis angle (ε) of the milling cutter included between the back plane (Pp) and the plane (X, Z); and
- the side angle (κ) of the milling cutter (3) included between the face plane (Pf) of the milling cutter and the cutting edge plane (Ps) going through the cutting edge (4) of the milling cutter (3),
whereas the cutting edge plane (Ps) and the plane (X, Y) of the machined workpiece coincide, and the occurring angles (ω), (ε), and (κ) have identical values within the range from 0,5° to 20°, while, at the same time, a negative value of the rake angle (α) of the milling cutter (3) included between the base plane (Pr) and the cutting edge (4) of the cutter is maintained within the range from minus 0,5° to minus 25°.

## Description

The subject matter of the invention is a method of milling surfaces of flat and profiled surfaces of board-shaped workpieces in the system referenced to said workpieces with the use of cutting tools such as shank cutters and angle milling cutters with definite cutting edge geometries, especially for machining wooden, wood-based, and composite materials, as well as metals, using the face of a milling cutter.

From patent description No. PL 222915 B1 known is a method of perpendicular positioning of the spindle axis with respect to the feeding motion in the course of milling which consists in that a milling cutter is mounted to spindle of a machine tool, and then the cutter is rotated so that the straight line on which the tip of one of the cutting edges of the milling cutter is positioned and the axis of the spindle are coincident with direction of feeding motion (vector vf), and then a length sensor with a flat measuring surface is mounted to the table of the machine tool and used to measure the position of the milling cutter edge with respect to the spindle axis; next, the spindle is rotated around its axis by angle 180° and moved in direction of the milling machine table feeding motion (vector vf) with respect to the spindle by the milling cutter diameter value; further, position of the same edge towards spindle axis is measured once again, and then the spindle is rotated in plane (X, Z) going through the spindle axis and the direction of feed motion (vector vf), so that position of the same edge in direction of the spindle axis is decreased by a half of the difference of indications of the sensor.

The methods of milling wooden or wood-base surfaces carried out on milling machines, including those numerically controlled, with the use of milling cutters having side angles, tilt angles, and axis angles characterising these tools, do not enable to obtain a tilt of the milling cutter axis in plane perpendicular to surface of the machined workpiece, and moreover, do not offer the possibility to secure continuity of contact of the milling cutter cutting edge with and pressure onto the machined surface of the workpiece, which results in damage to its edges.

The objective of the invention is to eliminate flaws and inconveniences of known and above-quoted methods of milling workpieces by using tools with properly defined geometry of the angle milling cutter, allowing to employ negative values of the axial angle while maintaining equality of values of the tool axis angle, the side angle, and the tool tilt angle within a defined range thanks to which a new system between said tool and the machined surface of the workpiece is created in the course of milling such workpieces and securing continuity of its contact with and pressure of its cutting edge onto the machined surface, improving at the same time its quality.

The method according to the invention can be applied in all types of milling machines, including those numerically controlled, including: milling centres, numerically controlled centres, panel formatting-edge banding machines, and panel formatting machines offering the option of tilting their spindles, as well as in machine tools which offer the possibility to tilt the machined workpiece.

According to the invention, the subject-matter of the method of machining a machined workpiece with the use of cutting devices with a defined cutting edge geometry by means of the milling method consists in that in the course of milling the workpiece, spindle of the milling machine together with the angle milling cutter mounted in it is tilted so that between this machined workpiece situated in the plane (X, Y, Z) and the angle milling cutter situated in the system of mutually perpendicular planes (Pp, Pf, Pr), the following angles are formed:
the tilt angle (ω) included between the face plane (Pf) of the angle milling cutter and the side surface (X, Y) of the machined workpiece;
the axis angle (ε) of the milling cutter included between the back plane (Pp) and the plane (X, Z); and
the cutter side angle (κ) included between the face plane (Pf) of the milling cutter and the cutting edge plane (Ps) going through the cutting edge of the cutter,
whereas the cutting edge plane (Ps or Ps') and the plane (X, Y) of the machined workpiece coincide, and the formed angles (ω), (ε), and (κ) have identical values in the range from 0,5° to 20° while, at the same time, a negative value of the tool edge rake angle (α) included between the base plane (Pr) and the cutting edge is maintained and kept within the range from minus 5° to minus 25°.

In the course of milling with the use of the method according to the invention with the use of tilted axis of rotation of the angle milling cutter and with appropriate geometry of its cutting edges allowing to obtain preferably right angle of the milled surface of workpiece, one can observed the effect of non-uniformity of cross-section of the cut, resulting in variability of the load - the cutting force.

Appropriate tilt of the axis of cutting tool in the plane perpendicular to surface of the machined workpiece or tangent to profile of the workpiece, as well as the geometry of the cutting tip, i.e. the cutting edge of the milling cutter, including its length, width, the relief angle of the cutting edge and the cutting depth, ensure continuous contact of the cutting edge with and its pressure onto the machined surface of the workpiece. Moreover, the system created this way gives rise to favourable effects with respect to both the machined workpiece and the cutting tool, without causing damage to edges of the workpiece and/or its veneer, and moreover, the system reduces the waves which occurred when milling methods known to date were used. Another favourable effect of milling with the use of the method according to the invention with the use of a tilt of the axis of the angle milling cutter consists in obtaining much better quality of the machined workpiece surface thanks to simultaneous rotational motion of cutting edges of the milling cutter with respect to the machining surface combined with longitudinal motion of the milling cutter tangent to the machined material, resulting from the tilt of the cutter axis and negative value of its rake angle which, at the same time, eliminates the need to apply subsequent machining processes such as grinding.

Moreover, appropriate combination of the angle of axis of the angle milling cutter with the geometry of its cutting edges allows also to achieve the right angle of the milled workpiece which is preferable in most cases.

Milling with the use of method according to the invention can be also carried out on milling machines equipped with working table offering the possibility to be tilted in the vertical plane.

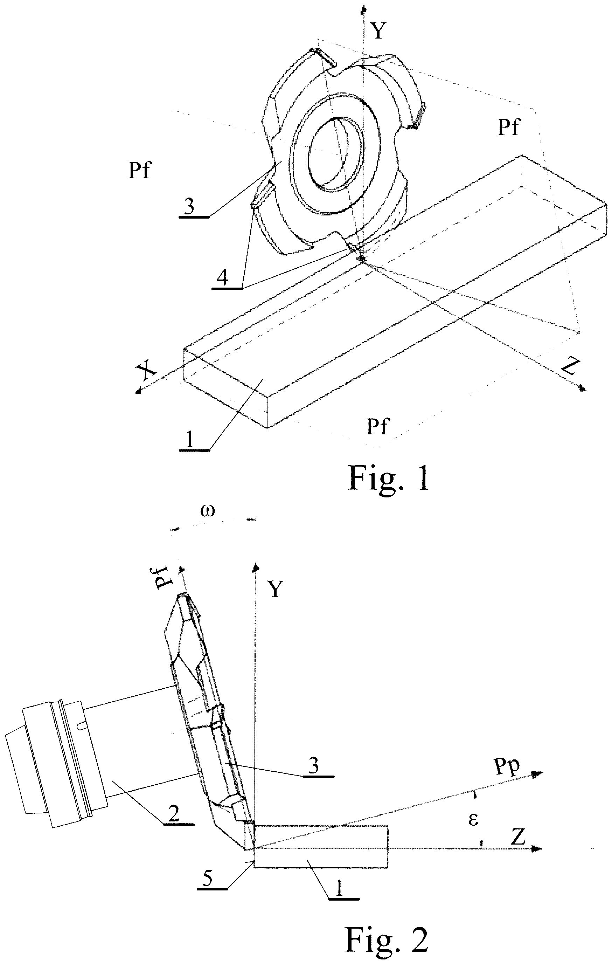

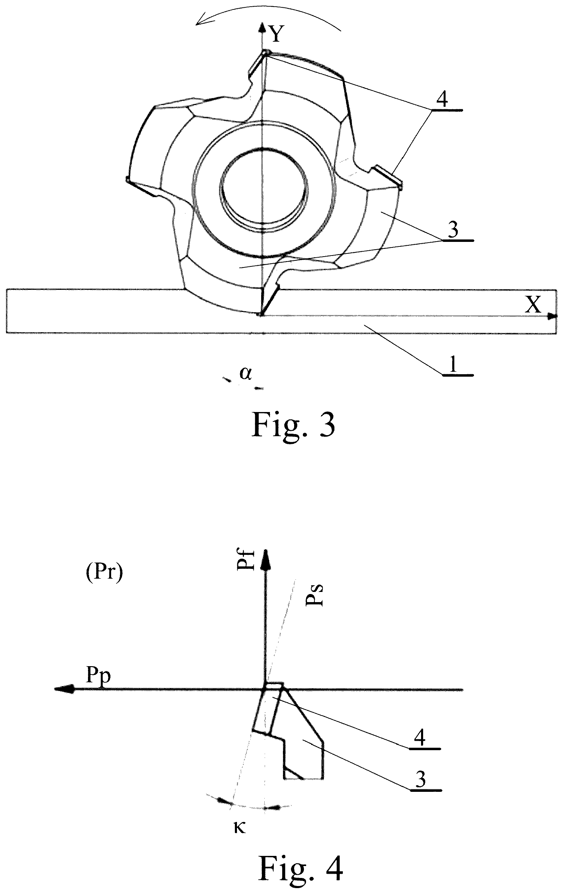

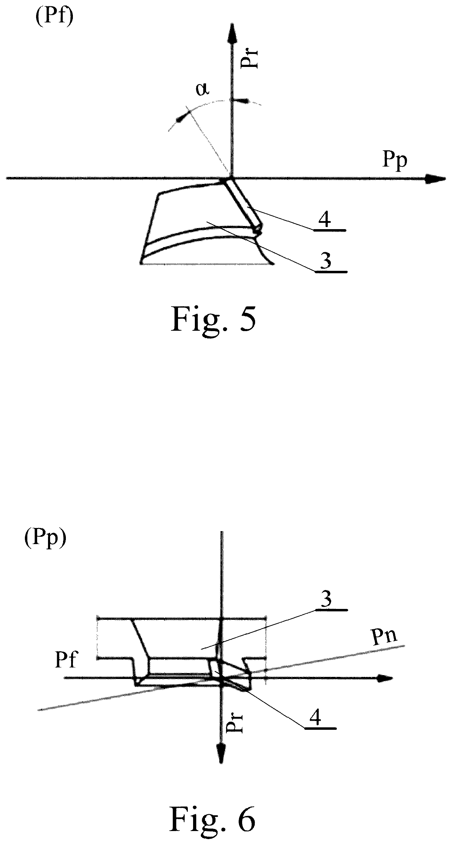

The method according to the invention is explained in greater detail with the use of example embodiments shown in Figs. 1-6, of which: Fig. 1 shows an angle milling cutter together with the machined workpiece in a perspective view; Fig. 2 - the same angle milling cutter together with the geometry of its cutting edge in the side view - in the base plane (Pr); Fig. 3 - the same angle milling cutter together with the geometry of its cutting edge in the (X, Y) plane; Fig. 4 - the geometry of the cutting edge of the angle milling cutter in the base plane (Pr); Fig. 5 - the geometry of the cutting edge of the angle milling cutter in the face plane (Pf); and Fig 6 - the geometry of the cutting edge of the angle milling cutter in the back plane (Pp).

### Example 1

On table of a milling machine (not shown in the figures), a workpiece (1) to be machined is mounted situated in the system of co-ordinates (X, Y, Z), and in the spindle of the machine, offering the possibility to be tilted with respect to the table, mounted is a cylindrical arbor (2) with angle milling cutter (3) fixed on the lower end of the arbor and situated in a system of mutually orthogonal planes (Pp, Pf, Pr), of which the face plane (Pf) goes through the face of the angle milling cutter (3), the base plane (Pr) goes through the axis of rotation of the cylindrical arbor (2), and the back plane (Pp) is tangent to the cutting edge (4) and, together with the remaining planes (Pf) and (Pr), goes through the origin of the system of co-ordinates (X, Y, Z) whereas the angle milling cutter (3) has cutting edges (4) distributed evenly along its perimeter. In the course of milling the surface of the workpiece (1) situated in plane (X, Y) the spindle, together with the angle milling cutter (3), was tilted with respect to the milled surface (5) in such a way that the angle between the plane (X, Y) of the workpiece (1) machined with the cutting edge (4) situated on the cutting plane (Ps) and the face plane (Pf), a tilt angle (ω) was created so that in the course of machining, the cutting plane (Ps) was coincident with the plane (X, Y) of the workpiece (1), whereas between the back plane (Pp) and the plane (X, Z), a tool axis angle (ε) was created, as well as a side angle (κ) between the face plane (Pf) of the cutter (3) and the cutting plane (Ps) of the cutting edge, with all the above-mentioned angles having identical values equalling 0,5° and with negative value of the cutting edge rake angle (α) of the angle milling cutter (3) included between the base plane (Pr) and the cutting edge (4) being maintained at the same time and equalling minus 0,5°.

After creation of the above-described machined workpiece-angle milling cutter system, cutting parameters appropriate for the machined workpiece were determined, including: the milling depth, the cutter rotational speed, and the feed rate, and next, the spindle of the milling machine, together with the angle milling cutter (3) mounted therein, was set in rotational motion, as a result of which the cutting edges (4) of the milling cutter milled the surface (5) of the workpiece (1) with the required precision/smoothness.

### Example 2

Surface of the workpiece 1 was milled in a way analogous to this described in Example 1, and the difference consisted only in that in this case; the tilt angle (ω), the tool axis angle (ε), and the side angle (κ) were all equal to 20°, with the negative value of the cutting edge rake angle (α) being maintained at the same time and equalling minus 55°.

### Example 3

On table of a milling machine (not shown in the figures) offering the option to be tilted in vertical plane, a workpiece (1) to be machined was mounted, and in fixed spindle of the machine, a cylindrical arbor (2) was mounted with an angle milling cutter (3) fixed on its lower end, said cutter having cutting edges (4) evenly distributed on its perimeter; next, the workpiece 1 was tilted with respect to vertical axis of the cutter so that between the system (X, Y, Z) of the workpiece and the system of planes (Pp, Pf, Pr), the following angles were formed: the tilt angle (ω), the tool axis angle (ε), and the side angle (κ) as measured in the systems analogous to those described in Example 1, said angles being equal to each other and to 15°, with the negative value of the rake angle (α) being maintained and equalling minus 18°. The machined workpiece-angle milling cutter system prepared this way was subject to the typical milling process with the following predefined parameters taken into account: the milling depth, the rotational speed, and the longitudinal feed rate of the spindle holding the cutter.

The milling methods described above allowed to achieve favourable effects of machining in the form of very good quality of machined surfaces of the workpieces, with hardly visible marks caused by passage of cutting tools.

## Claims

1. A method of milling in the machined workpiece system using the face of an angle milling cutter with a definite cutting edge geometry consisting in that the workpiece is mounted on table of a milling machine, while in the spindle of the milling machine offering the option to be tilted, an arbor is mounted with an angle milling cutter **characterised in that** in the course of milling the workpiece (1), the spindle (2) of the milling machine together with the angle milling cutter (3) mounted in said spindle is tilted so that between the machined workpiece (1) situated in the plane (X, Y, Z) and the angle milling cutter (3) situated in the system of mutually orthogonal planes (Pp, Pf, Pr), the following angles are formed:
- the tilt angle (ω) included between the face plane (Pf) of the angle milling cutter (3) and the side plane (X, Y) of the machined workpiece (1);
- the axis angle (ε) of the milling cutter included between the back plane (Pp) and the plane (X, Z); and
- the side angle (κ) of the milling cutter (3) included between the face plane (Pf) of the milling cutter and the cutting edge plane (Ps) going through the cutting edge (4) of the milling cutter (3),
whereas the cutting edge plane (Ps) and the plane (X, Y) of the machined workpiece coincide, and the occurring angles (ω), (ε), and (κ) have identical values within the range from 0,5° to 20°, while, at the same time, a negative value of the rake angle (α) of the milling cutter (3) included between the base plane (Pr) and the cutting edge (4) of the cutter is maintained within the range from minus 0,5° to minus 25°.
